# EUROPÄISCHE PATENTSCHRIFT

(11) **EP 0 584 133 B1**
(45) Veröffentlichungstag und Bekanntmachung des Hinweises auf die Patenterteilung: **26.04.1995**
(21) Anmeldenummer: 92909702.0
(22) Anmeldetag: 13.05.1992
(51) Int. Cl.: B65D 19/32

(54) **KUNSTSTOFF-PALETTE**
PLASTIC PALLET
PALETTE EN MATIERE PLASTIQUE

(30) Priorität: 16.05.1991 DE 9106055 U; 12.07.1991 DE 9108561 U; 21.08.1991 DE 9110315 U
(43) Veröffentlichungstag der Anmeldung: 02.03.1994
(73) Patentinhaber: MAUSER-WERKE GmbH, D-50321 Brühl (DE)
(72) Erfinder: SCHUBART, Gunter, D-6935 Waldbrunn (DE); PRZYTULLA, Dietmar, D-5014 Kerpen (DE)
(86) Internationale Anmeldenummer: EP9201053
(87) Internationale Veröffentlichungsnummer: WO9220585

(56) Entgegenhaltungen:
- EP-A- 0 231 792
- EP-A- 0 400 640
- DE-U- 7 108 874
- DE-U- 9 108 561
- DE-U- 9 110 315
- GB-A- 2 022 551
- US-A- 3 667 403

## Beschreibung

Die Erfindung betrifft eine Kunststoff-Palette zum Transport und zur Lagerung von Gütern, mit einer ebenen, durchgehend geschlossenen Oberplatte, die auf ihrer Unterseite mit einer Verrippung versehen ist, mit rechtwinklig zur Oberplatte ausgerichteten Abstandsstücken, die im Zentrum, in den Eckbereichen und in der Mitte einer jeden Außenkante der Palette angeordnet sind, und mit einem Bodenteil, das über die Abstandsstücke fest mit der Oberplatte verbunden ist, wobei zwischen Oberplattte und Bodenteil bzw. zwischen den Abstandsstücken Freiräume ausgespart sind, in welche die Gabein eines Gabelstaplers einschiebbar sind und die Palette dadurch transportierbar ausgebildet ist.

Aus Kunststoff gefertigte Paletten sind in vielen verschiedenen Formen bekannt. Zumeist sind diese Paletten zur Einsparung von Kunststoffmaterial mit zahlreichen Durchbrechungen und Aussparungen und einer ausgeprägten Verrippung versehen.
Eine gattungsmäßige Kunststoff-Palette mit den Merkmalen des Oberbegriffes des Anspruchs 1 ist z.B. aus der EP-A-0 400 640 vorbekannt. Diese bekannte Palette weist eine ebene, durchgehend geschlossene Oberplatte auf, die auf ihrer Unterseite mit zahlreichen Abstandsstücken versehen ist. Auf die Abstandsstücke werden in Längsrichtung der Palette jeweils am Rand und in der Mitte als Bodenteil drei Kufen aufgesteckt. Ein wesentliches Augenmerk ist auf die Ausbildung der Steckverbindungen dieser aus mehreren Teilen bestehenden Kunststoff-Palette ausgerichtet. Diese Palette weist zwar in Längsrichtung der Kufen eine gute Biegesteifigkeit auf, nicht aber in Querrichtung.
Es ist Aufgabe der Erfindung, diese Nachteile zu beseitigen und eine verwindungssteife Kunststoffpalette anzugeben, die eine hohe Tragfähigkeit bei statischen und dynamischen Belastungen aufweist.

Diese Aufgabe wird erfindungsgemäß dadurch gelöst, daß das Bodenteil der Palette als ebene, durchgehende dünne Bodenplatte mit innerhalb der Bodenplatte angeordneten Durchbrechungen/Aussparungen ausgebildet ist, wobei die Bodenplatte 20 in sich massiv, jedoch dünn mit einer Plattendicke von 6 mm bis 12 mm, vorzugsweise ca. 8 mm, ausgebildet ist. Durch die durchgehende Bodenplatte wird die Herstellung einer geschlossenen Kastenbauweise der Palette mit hoher Verwindungssteifigkeit bzw. Biegesteifigkeit in Längs- und in Querrichtung ermöglicht. Zur Vervollständigung der geschlossenen Kastenbauweise ist zweckmäßigerweise vorgesehen, daß die Palette zwischen der Oberplatte und der Unterplatte außen jeweils eine weitestgehend geschlossene durchgehende Seitenwandung aufweist. Lediglich zum Eingriff der Gabeln eines Gabelstaplers bzw. eines Hubrollenwagens sind in den Seitenwandungen jeweils zwei getrennte voneinander beabstandete Ausnehmungen vorgesehen, so daß die Palette als übliche Vierwege-Palette zu benutzen ist.

Gemäß einem Merkmal der Erfindung ist vorgesehen, daß die Bodenplatte aus zwei gleichen Teilstücken besteht und diese Teilstücke sowie auch die Oberplatte einteilig mit der angeformten Verrippung, mit den angeformten Abstandsstücken und mit den angeformten Seitenwandungen im kostengünstigen Preßverfahren hergestellt sind. Dadurch, daß die Bodenplatte aus zwei gleichen Teilstücken besteht, ist hierfür lediglich eine kleinere Preßform erforderlich.

Zweckmäßigerweise sind die beiden Teilstücke der Bodenplatte fest mit der Oberplatte über die Abstandsstücke bzw. die Seitenwandungen verschweißt; diese Verschweissung erfolgt vorzugsweise nach dem an sich bekannten Spiegelschweißverfahren.
Um Beschädigungen der bei Gebrauch an sich am meisten gefährdeten spitzen Ecken der Palette zu vermeiden, ist zweckmäßigerweise vorgesehen, daß die Ecken ein kleines Stück unter einem Winkel von ca. 45° abgeschrägt sind, bzw. eine in vertikaler Ebene verlaufende entsprechende Abschrägung aufweisen.

In besonderer Ausführung als Chemie-Palette mit Abmessungen von 1000 x 1200 x 145 mm weist diese Palette eine Tragfähigkeit von über 2.500 kg bei dynamischer und etwa 15.000 kg bei statischer Belastung auf. Ein besonderer Vorteil der erfindungsgemäßen Kunststoff-Palette besteht darin, daß die Bodenplatte sehr dünn, z.B. nur ca. 8 mm dick ausgebildet ist. Dabei sind die Ausnehmungen in den Seitenwandungen zum besseren Einfahren der Gabeln eines Gabelstaplers bzw. der Fahrschienen (Tragarme) eines Hubrollenwagens an den Kanten abgeflacht bzw. abgeschrägt, so also auch der Rand der Bodenplatte. Die Einfahrhöhe dieser Ausnehmungen in den Seitenwandungen beträgt ca. 90 mm, so daß die Chemie-Palette insbesondere für die Verwendung bzw. den Einsatz von Hubrollenwagen geeignet ist. Die in der Bodenplatte angeordneten Durchbrechungen bzw. Aussparungen sind ausschließlich bei leicht angehobener Palette für den Durchtritt der Rollen eines Hubrollenwagens vorgesehen.

Für die Lagerung von Stückgut oder Kleingebinden z.B. in Hochregallagern oder zum Transport z.B. per Lkw in genormten Containern ist die Palette als sogenannte Euro-Palette oder Pool-Palette mit einer Länge von 1200 mm und einer Breite von lediglich 800 mmm ausgebildet.
In weiterhin leicht abgewandelter Form ist die Palette in Ausbildung als Grundrahmen für einen Palettencontainer mit einer in die Oberfläche der Oberplatte im äußeren Umfangsbereich umlaufend eingeformten Nut zur Aufnahme der Unterkante des äußeren Stützmantels des Palettencontainers versehen. Dies verleiht dem Stützmantel in vorteilhafter Weise eine ununterbrochene umlaufende Fixierung in Radialrichtung gegen Ausbauchung des Innenbehälters und Stützmantels im gefüllten Zustand. Zur Abstützung des aus dünnwandigem Kunststoff bestehenden Innenbehälters ist weiterhin zweckmäßigerweise auf der Innenseite der Nut eine aus der Oberfläche der Palette hervorstehende umlaufende Abstützleiste mit nahezu dreieckförmigem Querschnitt vorgesehen. Auf der dem Kunststoff-Innenbehälter zugewandten Seite ist die Abstützleiste entsprechend der Rundung des Innenbehälters konvex abgerundet bzw. eingeformt.

Bei einer ähnlichen Ausführungsform der Kunststoff-Palette als Grundrahmen bzw. Bodenplatte für einen Palettencontainer mit aufgesetztem innerem dünnwandigen Kunststoffbehälter und diesen dicht umschließenden äußeren Verstärkungsmantel , z.B. aus Drahtgitterstäben, weist diese im Nahbereich ihres äußeren Randes bzw. in ihrem Umfangsbereich auf ihrer im wesentlichen ebenen und geschlossen (nicht durchbrochen) ausgebildeten Oberfläche eine zumindest teilweise umlaufende hochgezogene Stützschulter zur Anlage und Abstützung für den innen eingestellten Kunststoff-Behälter sowie zur Anlage und Abstützung für den von außen anliegenden Stützmantel des Palettencontainers auf. Diese Ausführungsform erhöht in vorteilhafter Weise die Fallfestigkeit auch aus größeren Absturzhöhen und verhindert ein seitliches Verschieben des gefüllten Kunststoff-Behälters relativ zur Bodenpalette im Moment des Bodenaufpralls.
Zur weiteren Radialfixierung des äußeren Stützmantels kann diese Ausführungsform außen vor der hochgezogenen Stützschulter zusätzlich mit der in Anspruch 8 beschriebenen, im Umfangsbereich umlaufend eingeformten Nut zur Aufnahme des unteren Randes des äußeren Stützmantels ausgestattet sein.

Die Erfindung wird nachfolgend anhand von in den Zeichnungen dargestellten Ausführungsbeispielen näher erläutert und beschrieben. Es zeigen:
- Figur 1: eine Kunststoff-Palette gemäß der Erfindung in perspektivischer Ansicht von oben,
- Figur 2: eine Seitenansicht der Kunststoff-Palette gemäß Fig. 1,
- Figur 3: eine Draufsicht auf den Unterboden bzw. die Bodenplatte der Kunststoff-Palette gemäß Fig. 1,
- Figur 4: in perspektivischer Ansicht die Unterseite der Palette gemäß Fig. 1, wobei im vorderen Bereich die Bodenplatte zum Teil weggebrochen (geschnitten) ist,
- Figur 5: in perspektivischer Ansicht ein weiteres Ausführungsbeispiel der erfindungsgemäßen Kunststoff-Palette für einen Paletten-Container,
- Figur 6: eine Seitenansicht der Palette gemäß Fig. 5,
- Figur 7: eine Draufsicht auf die Palette gemäß Fig. 5,
- Figur 8: eine Seitenansicht der Palette gemäß Fig. 5 mit eingeformter Sammelrinne,
- Figur 9: eine Draufsicht auf den Unterboden bzw. die Bodenplatte der Palette gemäß Fig. 5,
- Figur 10: in perspektivischer Ansicht die Unterseite der Palette gemäß Fig. 5 mit im vorderen Bereich weggebrochener (geschnittener) Bodenplatte,
- Figur 11: in Seitenansicht ein weiteres Ausführungsbeispiel der erfindungsgemäßen KunststoffPalette mit hochgezogener Stützschulter für einen Paletten-Container,
- Figur 12: eine Draufsicht auf die Palette gemäß Fig. 11 und
- Figur 13: den Randbereich der Palette gemäß Fig. 11 in vergrößerter Querschnittsdarstellung.

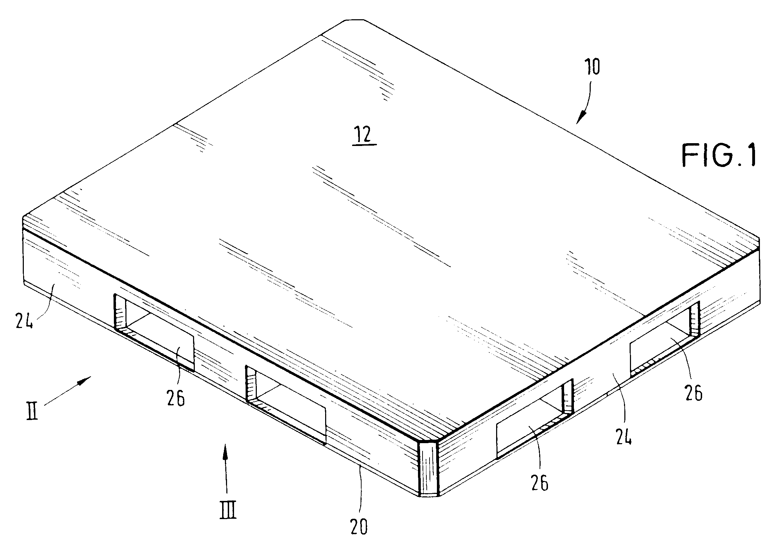

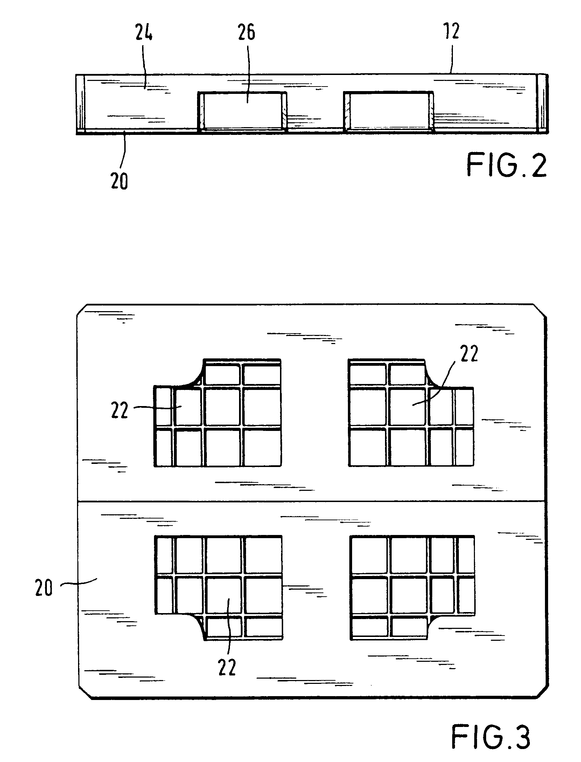

Mit der Bezugsziffer 10 ist in Figur 1 ein rechteckförmige Kunststoff-Palette bezeichnet, die eine vollständig geschlossene, undurchbrochene glatte bzw. ebene Oberplatte 12 aufweist. Zur Gewährleistung einer guten Rutschfestigkeit kann die Oberfläche der Oberplatte 12 aufgerauht, d.h., z.B. mit einer Riffelung versehen oder genarbt ausgebildet sein.
Die Ecken der Palette 10 sind um ein geringes Stück (ca. 20 - 30 mm) abgeschrägt.
Die zur Oberplatte 12 und Bodenplatte 20 jeweils senkrecht verlaufenden äußeren Seitenwandungen 24 sind ebenfalls - wie auch aus Figur 2 ersichtlich ist - durchgehend glatt und eben ausgebildet; sie weisen jeweils zwei getrennte bzw. voneinander entsprechend beabstandete Ausnehmungen 26 zum Eingriff der Gabeln eines Gabelstaplers bzw. der Tragarme eines Hubrollenwagens auf.
Die in verwindungssteifer Kastenbauweise ausgebildete Vier-Wege-Palette bzw. Doppeldeck-Palette weist als Euro-bzw. Pool-Palette vorzugsweise die Abmessungen von ca. 800 x 1200 x 145 mm auf. Als Chemie-Palette sind Länge/Breite-Abmessungen von ca. 1000 x 1200 x 145 mm vorgesehen.

Aus Figur 3 wird deutlich, daß auch das Bodenteil als ebene, durchgehende dünne Bodenplatte 20 ausgebildet ist, und daß lediglich innerhalb der Bodenplatte 20 vier im wesentlichen rechteckförmige Durchbrechungen bzw. Aussparungen 22 vorgesehen sind, um den Durchtritt der Rollen eines Hubwagens zu ermöglichen. Die erfindungsgemäße Kunststoff-Palette soll nämlich insbesondere für die Verwendung von Hubrollenwagen in Lagerhallen bzw. Hochregallagern geeignet sein. Daher ist auch die Bodenplatte 20 vergleichsweise dünn (ca. nur 8 mm dick) mit stark abgeschrägter Einfahrkante ausgebildet.

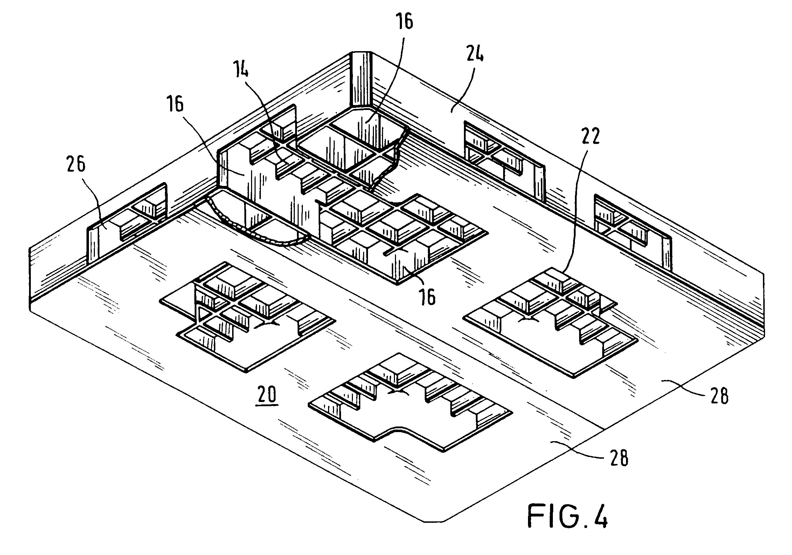

Die perspektivische (isometrische) Ansicht der Kunststoff-Palette 10 in Figur 4 läßt die rechtwinkelig ausgerichtete Verrippung 14 auf der Unterseite der Oberplatte 12 (Oberboden) erkennen. Hieraus wird auch deutlich, daß die flache Bodenplatte 20 aus zwei gleichen Teilstücken 28 besteht, die längs einer Mitteltrennaht bündig (geschlossen) aneinander anliegen.
Aus der Verrippung 14 auf der Unterseite der Oberplatte 12 herausragend sind einige Abstandsstücke 16 angeordnet, die im Zentrum der Palette, in ihren Eckbereichen und jeweils in der Mitte einer jeden Außenkante (Seitenwandung) der Palette angeordnet sind. Die Verrippung zwischen den Abstandsstücken könnte jedoch auch unter einem Winkel von 45° diagonal verlaufend ausgebildet sein.

Erfindungsgemäß ist die Oberplatte 12 einteilig mit Verrippung 14 mit den Abstandsstücken 16 und mit allen Seitenwandungen 24 in einem Arbeitsgang in einem Stück im Preßverfahren hergestellt, genause wie die beiden Teilstücke 28 der Bodenplatte 20. Die drei Teile der Palette sind danach - vorzugsweise nach dem Spiegelschweißverfahren - fest und unlösbar miteinander verbunden bzw. verschweißt. Dadurch wird die verwindungs- bzw. biegesteife Kastenform der erfindungsgemäßen Kunststoff-Palette mit extrem dünnem Unterzug realisiert.

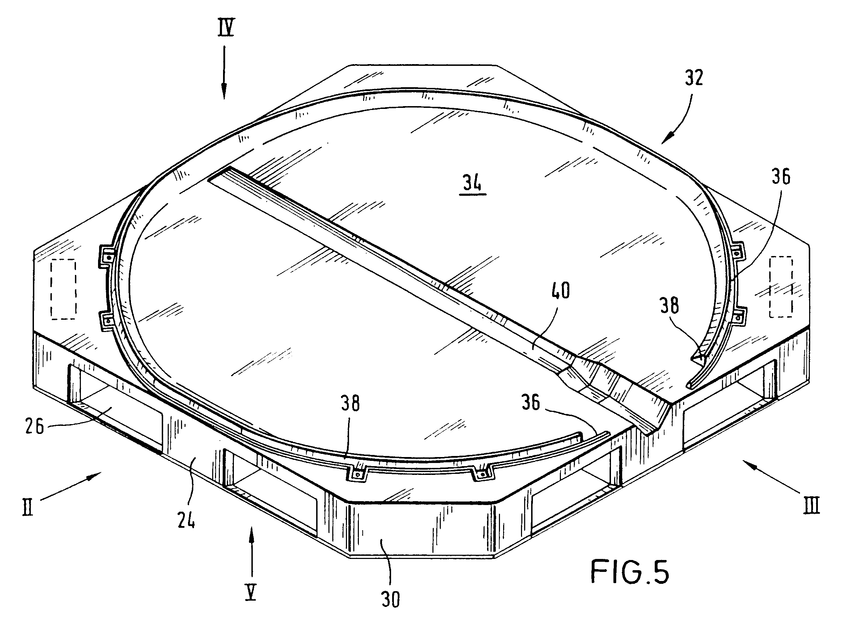

Eine weitere erfindungsgemäße Ausführungsform der Kunststoff-Palette ist in Figur 5 dargestellt. Diese besondere Kunststoff-Palette 32 ist als Grundrahmen für einen Palettencontainer mit innerem dünnwandigem Kunststoffbehälter (ca. 1000 l Fassungsvermögen) und einem diesen fest umschließenden Stützmantel (z.B. aus Blech, Stahldrahtgitter oder ein aus gewickeltem und verklebtem Kraftpapier bestehender Pappmantel) vorgesehen. Zur Aufnahme der Unterkante des Stützmantels des Palettencontainers ist in die ebene Oberfläche 34 der Palette 32 eine im Umfangsbereich umlaufende Nut 36 (z.B. 8 mm breit) eingeformt bzw. eingepreßt. Diese Nut 36 verleiht dem Stützmantel des Palettencontainers einen festen Sitz und eine sichere Fixierung gegen radiale Kräfte wie z.B. gegen Ausbeulkräfte nach außen an den geraden Seitenkanten und Zugkräften nach innen in den Eckbereichen.

Weiterhin ist zur vorteilhaften Abstützung des unteren Randes des inneren Kunststoff-Behälters auf der Innenseite der Nut 36 eine aus der Oberfläche 34 der Palette 32 hervorstehende umlaufende Leiste 38 mit nahezu dreieckförmigem Querschnitt ausgebildet. Vorzugsweise in den Eckbereichen der Palette sind kleine rechteckige Einformungen mit Bohrungen für Gewindeschrauben vorgesehen; in diese Einformungen werden Halteklammern eingesetzt und der Stützmantel kann damit gegen axiale Zugkrafteinwirkung fest auf der Palette 32 befestigt bzw. verschraubt werden. In der Mitte der Palette 32 ist eine gerade verlaufende, sich zum vorderen Außenrand der Palette hin vertiefende Sammelrinne 40 ausgebildet.
In diese Rinne 40 greift eine entsprechend im Unterboden des darauf angeordneten dünnwandigen Kunststoff-Behälters ausgeformte Auslaufrinne ein, die zu dem seitlichen bodenseitigen Auslaufventil des Kunststoff-Behälters führt und eine vollständige Restlosentleerung des Behälters gewährleistet. Das Oberdeck der Palette 32 kann zweckmässigerweise in einem oder mehreren Eckbereichen an der Abschrägung 30 jeweils an der gleichen Stelle mit Prägeeinsätzen versehen sein. Dort können dann kundenspezifische Angaben wie Herstelldatum, Firmenzeichen, Zulassungsnummer, Kunden-Logo o.ä. angeordnet werden.

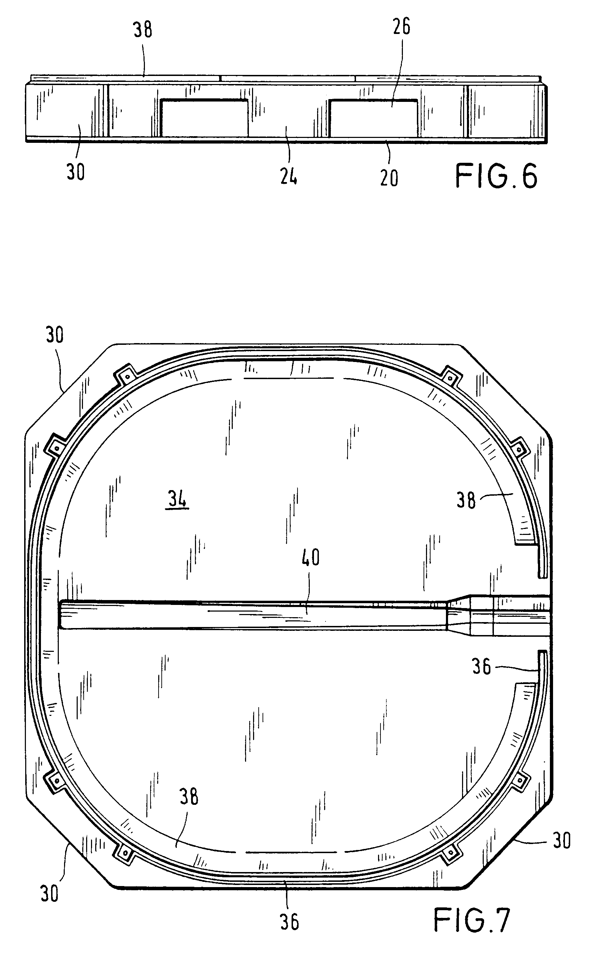

Aus der Seitenansicht in Figur 6 wird die in vertikaler Ebene ausgebildete vergrößerte Abschrägung 30 der Eckbereiche deutlich.

In der Draufsicht auf die Kunststoff-Palette 32 gemäß Figur 7 ist der Verlauf der eingeformten Nut 36 mit der sich innen anschließenden Abstützleiste 36 besser erkennbar.

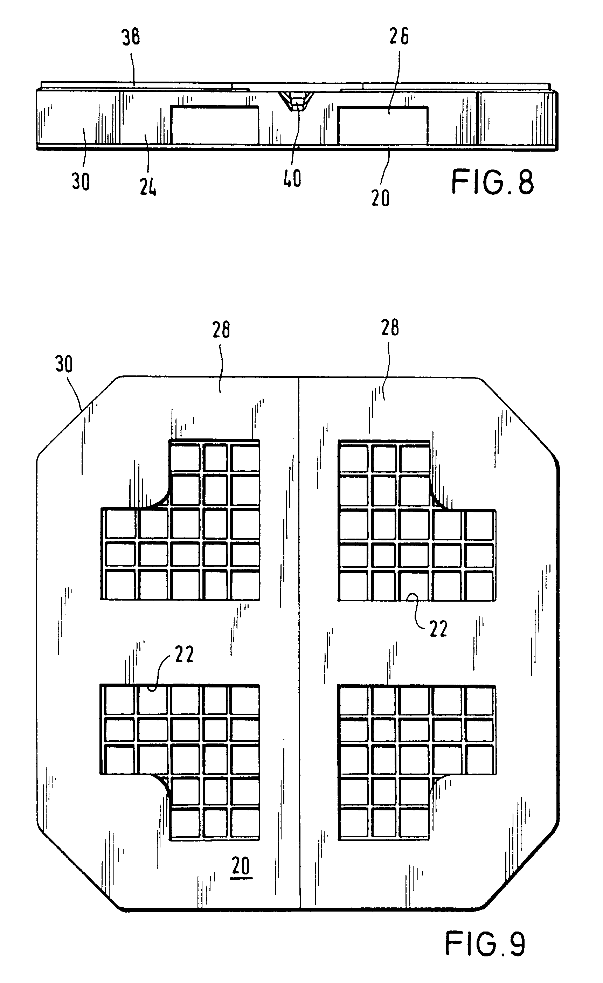

Figur 8 zeigt noch einmal die Seitenansicht der Kunststoff-Palette 32 mit vorderseitig einmündender Rinne 40; in Figur 9 ist als Bodenansicht der Palette 32 erkennbar, daß auch hier die Bodenplatte 20 aus zwei gleichen Teilstücken 28 besteht; dies hat fertigungstechnische Vorteile. Die Bodenplatte könnte natürlich auch als einteilige Platte hergestellt sein.

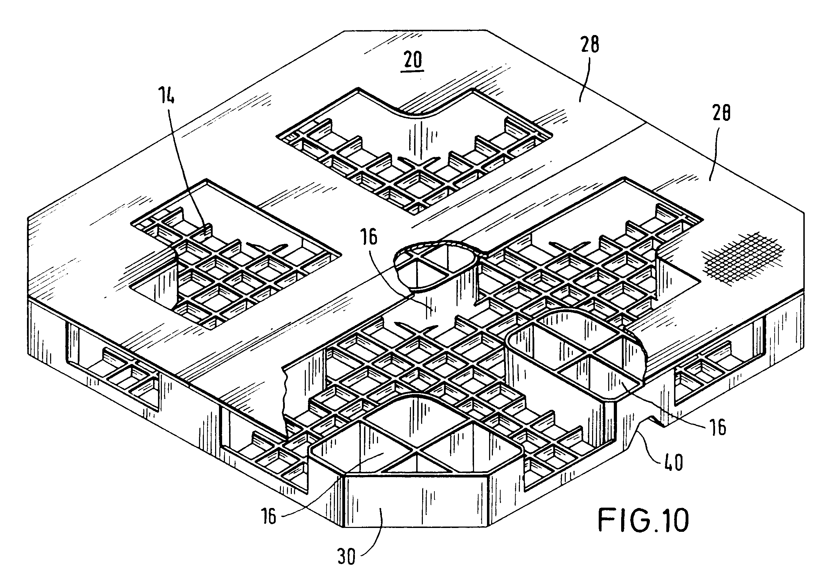

Weiterhin zeigt Figur 10 noch einmal eine perspektivische Ansicht der Palette 32 auf die Bodenseite, wobei zur besseren Darstellung der Verrippung 14 ein Teil der Bodenplatte 28 weggebrochen ist. Hierdurch sind auch die Abstandsstücke 16 in der Mitte, in den Eckbereichen und an den Außenkanten der Palette deutlich erkennbar.
Die Bodenplatte 20 bzw. die Bodenplatten-Teilstücke 28 sind in sich massiv, jedoch mit einer Plattendicke zwischen etwa 6 mm bis 12 mm, vorzugsweise ca. 8 mm dünn ausgebildet. Dabei ist die Bodenplatte 20 aus dem gleichen Werkstoff (Kunststoffmaterial) wie die Oberplatte hergestellt. Zur Erhöhung der Materialfestigkeit und des E-Moduls kann die Bodenplatte weiterhin zusätzlich mit geeigneten Füllstoffen, wie z.B. eingearbeitetes Fasermaterial, Gewebematten, Drahteinlagen oder ähnlichem als Zuganker ausgestattet sein.

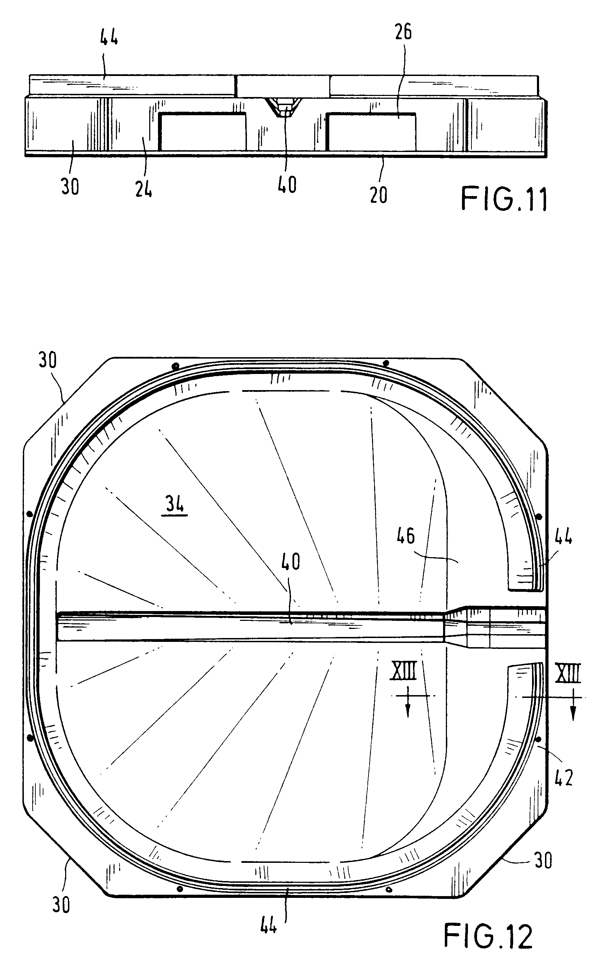

Eine weitere vorteilhafte Ausführungsform der Kunststoff-Palette ist in Figur 11 in Seitenansicht und in Figur 12 in Draufsicht dargestellt. Diese besondere Palettenausbildung ist ebenfalls als Bodenpalette bzw. Grundrahmen für einen Palettencontainer vorgesehen, der einen inneren dünnwandigen Kunststoffbehälter mit zentraler oberer Einfüllöffnung und seitlichem unteren Auslaufventil, einen äußeren, den Kunststoffbehälter dicht umschließenden Stützmantel aus z.B. Stahlbech, Drahtgittergeflecht, Metallrohrrahmen o.ä. und die besagte Bodenpalette umfaßt. Im Umfangsbereich der Palettenoberfläche 34 ist eine von der Oberfläche 34 hochgezogene bzw. hervorstehende Stützschulter 44 ausgebildet. Diese Stützschulter 44 könnte z.B. ein vorgefertigtes ringteilförmiges Spritzgußteil sein, das auf der Palettenoberfläche befestigt (aufgeklebt, aufgeschweißt oder/und aufgeschraubt) ist; vorzugsweise wird die Stützschulter 44 jedoch bereits bei der Herstellung der Palettenoberplatte 12 einteilig bzw. einstückig mit dieser verbunden ausgeformt auf kostengünstige Weise im gleichen Arbeitsgang hergestellt.
Beim schrägen Absturz auf eine Seitenkante eines gefüllten Palettencontainers z.B. von der Ladefläche eines Lkw's verhindert die Stützschulter 24 eine Verschiebung des inneren Kunststoffbehälters gegenüber der Kunststoff-Palette, und ein Beschädigen bzw. Abreißen der Befestigungsmittel des äußeren Stützmantels von der Bodenpalette wird vermieden.
Mit der erfindungsgemäßen Palettenausführung kann auf sonst übliche Hilfsmittel wie zusätzliche Unterstell-Schalen oder eingelegte Dämpfungsmatten mit hochgezogenem Randbereich oder Styropor-Teilstücke o.ä. verzichtet werden.

Die umlaufende Stützschulter 44 ist lediglich im Mündungsbereich der eingeformten Rinne 40 bzw. an der Stelle des Auslaufventiles des inneren Kunststoffbehälters unterbrochen. Die Höhe der Stützschulter 44 beträgt zwischen 30 mm bis etwa 120 mm, vorzugsweise jedoch zwischen 60 bis 80 mm. Die Stützschulter 44 könnte aber auch nur in der vorderen Hälfte der Palette um das Auslaufventil herum ausgebildet sein. Eine andere umlaufende Stützschulter könnte eine unterschiedliche Höhe aufweisen, so z.B in der vorderen Hälfte der Palette eine Höhe von etwa 70 mm und in der hinteren Hälfte der Palette eine Höhe von nur etwa 30 mm, wobei der Übergang kontinuierlich ausgebildet sein kann.

Die Abmessungen der Kunststoff-Paletten für Palettencontainer betragen bei einem (kubischen) Oval-Rund-Container z.B. 1160 x 1160 mm, für einen 1000 l-Rechteck-Container sind aber auch Paletten-Abmessungen von 1000 x 1200 mm gebräuchlich. Dabei liegt dann das Auslaufventil bzw. der Mündungsbereich der Rinne 40 auf einer schmaleren Palettenseite.

Wie aus Fig. 12 weiterhin deutlich wird, ist die geschlossene (d.h. nicht durchbrochene) Oberfläche 34 der Kunststoff-Palette auf der Palettenseite des Auslaufventils bzw. parallel dazu mit einem zur Stützschulter 44 angehobenen Oberflächenbereich 46 versehen. Weiterhin ist zur Verbesserung der Restentleerung des inneren Kunststoffbehälters in Anpassung an dessen korrespondierende Bodenkonfiguration die Oberfläche 34 der Palette leicht flächig zur mittigen Rinne 40 hin abfallend geneigt, d.h. mit einem leichten Gefälle versehen. Die Gefällehöhe von der seitlichen Stützschulter 44 bis zur mittigen Rinne 40 beträgt etwa 8 bis 12 mm.

Wie in Fig. 12 weiterhin durch schwarze Punkte angedeutet ist, können im äußeren Randbereich 42 außen vor der Stützschulter 44 mehrere, wie angedeutet z.B. acht Bohrungen durch die Palette hindurch angebracht sein, durch welche verlängerte vertikale Gitterstäbe eines Gitter-Stützmantels hindurchgeführt und von unten gegen die Palette befestigt sind.

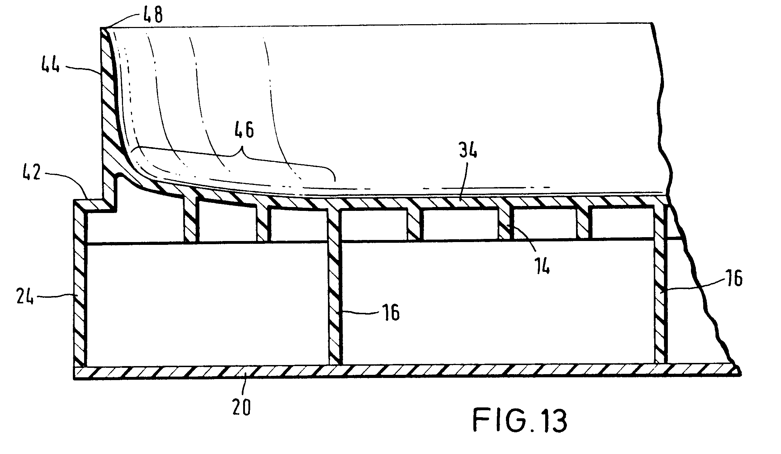

In Figur 13 ist der Randbereich mit der einstückig aus der Oberplatte der Palette hochgezogenen Stützschulter 44 gemäß Schnittlinie XIII-XIII aus Fig. 12 vergrößert dargestellt. Hieraus wird die Ausbildung des angehobenen Oberflächenbereiches 46 aus der Oberfläche 34 der Palette besser deutlich. Die Stützschulter 44 weist in Anpassung an den eingestellten Kunststoffbehälter eine abgeschrägte Oberkante 48 auf. Außen vor der Stützschulter 44 ist der ebene Randbereich 42 dargestellt, in welchen die angesprochenen Bohrungen für die verlängerten vertikalen Gitterstäbe eingebracht werden. Im Randbereich 42 könnte jedoch gleichfalls zusätzlich die in Anspruch 8 beschriebene Nut 36 zum Einstellen des unteren Randes des Verstärkungsmantels des Palettencontainers eingeformt sein.

In zweckmäßiger Weise ist schließlich vorgesehen, daß die erfindungsgemäße Kunststoff-Palette 10 bzw. 32 vollständig aus aufgearbeitetem Altkunststoffmaterial (z.B. Recycling-PE) besteht. Eine solche Palette wiegt ca. 25 kg und ist vorzugsweise schwarz eingefärbt. Damit ist eine gute Möglichkeit gegeben, rückgeführtes Kanister- bzw. Faßmaterial (z.B. hochmolekulares Niederdruck-PE), das zur erneuten Behälterherstellung aufgrund von Verunreinigungen nicht mehr verwendet werden kann, einem neuen nützlichen Verwendungszweck zuzuführen. Die zuvor beschriebenen Merkmale gelten in beliebiger Kombination soweit wie möglich für alle Palettenausführungen.

## Patentansprüche

1. Kunststoff-Palette (10) zur Lagerung und zum Transport von Gütern,
mit einer im wesentlichen ebenen, durchgehend geschlossenen Oberplatte (12), die auf ihrer Unterseite mit einer Verrippung (14) versehen ist,
mit rechtwinklig zur Oberplatte (12) ausgerichteten Abstandsstücken (16), die im Zentrum, in den Eckbereichen und in der Mitte einer jeden Außenkante der Palette angeordnet sind, und
mit wenigstens einem Bodenteil, das über die Abstandsstücke (16) fest mit der Oberplatte (12) verbunden ist, wobei zwischen Oberplatte (12) und Bodentell bzw. zwischen den Abstandsstücken (16) jeweils Freiräume ausgespart sind, in welche die Gabeln eines Gabelstaplers einschiebbar sind und die Palette (10) dadurch transportierbar ausgebildet ist,
**dadurch gekennzeichnet,** daß das Bodenteil als ebene, durchgehende dünne Bodenplatte (20) mit innerhalb der Bodenplatte (20) angeordneten Durchbrechungen bzw. Aussparungen (22) ausgebildet ist, wobei die Bodenplatte (20) in sich massiv, jedoch dünn mit einer Plattendicke von etwa 6 mm bis 12 mm, vorzugsweise ca. 8 mm, ausgebildet ist.

2. Kunststoff-Palette nach Anspruch 1,
**dadurch gekennzeichnet,** daß die Palette (10) zwischen Oberplatte (12) und Bodenplatte (20) außen jeweils eine durchgehende Seitenwandung (24) mit jeweils zwei getrennten Ausnehmungen (26) zum Eingriff der Gabeln eines Gabelstaplers bzw. eines Hubrollenwagens aufweist.

3. Kunststoff-Palette nach Anspruch 1 oder 2,
**dadurch gekennzeichnet,** daß die Bodenplatte (20) aus zwei gleichen Teilstücken (28) besteht und diese beiden Teilstücke (28) sowie die einteilige Oberplatte (12) mit Verrippung (14), mit Abstandsstücken (16) und mit Seitenwandungen (24) jeweils im Preßverfahren hergestellt sind.

4. Kunststoff-Palette nach Anspruch 1, 2 oder 3,
**dadurch gekennzeichnet,** daß die Bodenplatte (20) bzw. die beiden Teilstücke (28) der Bodenplatte (20) über die Abstandsstücke (16) bzw. die Seitenwandungen (24) fest mit der Oberplatte (12), vorzugsweise nach dem Spiegelschweißverfahren, verschweißt sind.

5. Kunststoff-Palette nach Anspruch 1, 2, 3 oder 4,
**dadurch gekennzeichnet,** daß die Ecken der Palette (10) unter einem Winkel von ca. 45° abgeschrägt sind bzw. eine in vertikaler Ebene verlaufende Abschrägung (30) aufweisen.

6. Kunststoff-Palette nach Anspruch 1, 2, 3, 4 oder 5,
**gekennzeichnet durch**
eine Ausbildung als sogenannte Euro- bzw. Pool-Palette mit Länge/Breite-Abmessungen von 1200 x 800 mm.

7. Kunststoff-Palette nach Anspruch 1, 2, 3, 4 oder 5,
**gekennzeichnet durch**
eine Ausbildung als sogenannte Chemie-Palette mit Lange/Breite-Abmessungen von 1200 x 1000 mm.

8. Kunststoff-Palette nach Anspruch 1, 2, 3, 4 oder 5,
**dadurch gekennzeichnet,** daß die Palette (32) in Ausbildung als Grundrahmen für einen Palettencontainer in der ebenen Oberfläche (34) eine im Umfangsbereich umlaufende eingeformte Nut (36) zur Aufnahme der Unterkante des äußeren Stützmantels des Palettencontainers aufweist.

9. Kunststoff-Palette nach Anspruch 8,
**dadurch gekennzeichnet,** daß auf der Innenseite der Nut (36) eine, aus der Oberfläche (34) der Palette (32) hervorstehende umlaufende Leiste (32) mit nahezu dreieckförmigem Querschnitt vorgesehen ist.

10. Kunststoff-Palette nach Anspruch 8 oder 9,
**dadurch gekennzeichnet,** daß in der Mitte der Palette (32) eine gerade verlaufende, sich zum Außenrand der Palette (32) hin vertiefende Rinne (40) ausgebildet ist.

11. Kunststoff-Palette nach einem der vorhergehenden Ansprüche 1 bis 10,
**dadurch gekennzeichnet,** daß die Bodenplatte (20) bzw. die Bodenplattenteilstücke (28) und die Oberplatte (12) vollständig aus aufgearbeitetem Altkunststoffmaterial (Recycling-Kunststoff) bestehen.

12. Kunststoff-Palette nach einem der vorhergehenden Ansprüche 1 bis 12,
**dadurch gekennzeichnet,** daß die Bodenplatte (20) aus dem gleichen Werkstoff (Kunststoffmaterial) wie die Oberplatte (12) hergestellt ist, jedoch zusätzlich mit einem geeigneten Füllstoff bzw. Fasermaterial zur Erhöhung der Materialfestigkeit und des E-Moduls versehen ist.

13. Kunststoff-Palette nach einem der vorhergehenden Ansprüche 1 bis 13,
**dadurch gekennzeichnet,** daß die Palette (32) in Ausbildung als Bodenpalette bzw. Grundrahmen für einen Palettencontainer auf ihrer im wesentlichen ebenen und geschlossenen Oberfläche (34) im Nahbereich ihres äußeren Randes bzw. in ihrem Umfangsbereich eine zumindest teilweise umlaufende, hochgezogene Stützschulter (44) zur Anlage und Abstützung für den eingestellten Kunststoff-Behälter des Palettencontainers aufweist.

14. Kunststoff-Palette nach einem der vorhergehenden Ansprüche 1 bis 14,
**dadurch gekennzeichnet,** daß die im wesentlichen ebene Oberfläche (34) der Palettenoberplatte (12) ein leichtes Gefälle bzw. zur mittigen Rinne (40) hin leicht abfallend geneigt ausgebildet ist.

## Claims

1. A plastics pallet (10) for storage and transport of goods,
- with a substantially planar upper plate (12), closed throughout and provided with ribbing (14) on the lower surface thereof;
- with spacing parts (16) oriented at right angles to the upper plate (12) and arranged in the centre, the corner regions and the middle of each outer edge of the pallet; and
- with at least one base part which is securely connected to the upper plate (12) via the spacing parts (16), respective free spaces being left open between the upper plate (12) and the base part, and between the spacing parts (16), in which free spaces the forks of a fork lift truck can be inserted, the pallet (10) thus being formed to be transportable;
**characterised in that**
the base part is formed as a planar continuous thin base plate (20) with openings or recesses (22) arranged within the base plate (20), the said plate (20) being formed to be solid yet thin, with a plate thickness of approximately 6 mm to 12 mm, preferably approximately 8 mm.

2. A plastics pallet in accordance with claim 1, **characterised in that** the pallet (10) has a continuous exterior side wall (24) between the upper plate (12) and the base plate (20), each side wall having two separate recesses (26) in which the forks of a fork lift truck or a three wheel lifting truck can engage.

3. A plastic pallet in accordance with claim 1 or 2, **characterised in that** the base plate (20) comprises two identical parts (28), and the said parts (28) and the single-part upper plate (12) with ribbing (14), spacing parts (16) and side walls (24) are each produced by a moulding process.

4. A plastics pallet in accordance with claim 1, 2 or 3, **characterised in that** the base plate (20) or the two parts (28) forming the base plate (20) are securely welded to the upper plate (12) via the spacing parts (16) and/or the side walls (24), preferably by butt-welding.

5. A plastics pallet in accordance with claim 1, 2, 3 or 4, **characterised in that** the corners of the pallet (10) are bevelled at approximately 45° or have a bevelled portion (30) extending in the vertical plane.

6. A plastics pallet in accordance with claim 1, 2, 3, 4 or 5, **characterised by** formation as a so-called Europallet or interchangeable European pallet, with length and breadth dimensions of 1200 x 800 mm.

7. A plastics pallet in accordance with claim 1, 2, 3, 4 or 5, **characterised by** formation as a so-called chemical pallet with length and breadth dimensions of 1200 x 1000 mm.

8. A plastics pallet in accordance with claim 1, 2, 3, 4 or 5, **characterised in that** the pallet (32), formed as a base frame for a pallet container, has a moulded circumferential groove (36) on the planar upper surface (34) in the peripheral region thereof, to receive the lower edge of the outer supporting casing of the pallet container.

9. A plastics pallet in accordance with claim 8, **characterised in that** a circumferential strip (38), projecting from the surface (34) of the pallet (32) and having a substantially triangular cross-section, is provided on the inner surface of the groove (36).

10. A plastics pallet in accordance with claim 8 or 9, **characterised in that** a channel (40), extending in a straight line and deepening towards the outer edge of the pallet (32), is formed in the centre of the pallet (32).

11. A plastics pallet in accordance with one of the preceding claims 1 to 10, **characterised in that** the base plate (20) or the base plate parts (28) consist entirely of re-processed waste plastics material (recycled plastics).

12. A plastics pallet in accordance with one of the preceding claims 1 to 11, **characterised in that** the base plate (20) is produced from the same material (plastics material) as the upper plate (12), but is additionally provided with a suitable filler and/or fibre material to increase the material strength and the modulus of elasticity.

13. A plastics pallet in accordance with one of the preceding claims 1 to 12, **characterised in that** the pallet (32), formed as a base pallet or base frame for a pallet container, has an at least partially circumferential raised supporting shoulder (44) on its substantially planar and continuous upper surface (34) in the vicinity of the outer edge or in the circumferential region, the said shoulder serving to position and support the inserted plastics receptacles of the pallet container.

14. A plastics pallet in accordance with one of the preceding claims 1 to 13, **characterised in that** the substantially planar upper surface (34) of the pallet upper plate (12) is formed as a slight slope, or is formed to be inclined slightly downwards towards the central channel (40).

## Revendications

1. Palette en matière synthétique (10) pour le stockage et le transport de marchandises, qui comporte
- une plaque supérieure (12) pleine, sensiblement plane, dont la face inférieure est pourvue d'un nervurage (14),
- des entretoises (16) perpendiculaires à la plaque supérieure (12), disposées au centre, dans les zones d'angle et au milieu de chaque bord extérieur de la palette,
- au moins une partie de fond assemblée avec la plaque supérieure (12) par l'intermédaire des entretoises (16), entre la plaque supérieure (12) et le fond, respectivement les entretoises (16), étant ménagés des espaces dans lesquels peuvent s'engager les dents d'une empileuse à fourche en vue du transport de la palette (10), *caractérisée en ce que* le fond est constitué d'une plaque (20) pleine, mince et plane, à l'intérieur de laquelle sont prévues des découpes, respectivement des évidements (22), et, qui est massive mais mince, d'une épaisseur variant de 6 mm à 12 mm, de préférence de 8 mm.

2. Palette en matière synthétique selon la revendication 1 *caractérisée par* une paroi latérale continue (24), disposée entre la plaque supérieure (12) et la plaque de fond (20), courant le long de leurs bords extérieurs, et, pourvue de deux ouvertures (26) distinctes dans lesquelles peuvent s'engager les dents d'une empileuse à fourche, respectivement d'un chariot élévateur.

3. Palette en matière synthétique selon les revendications 1 ou 2 *caractérisée en ce que* la plaque de fond (20) se compose de deux parties (28) qui sont fabriquées par moulage par compression, de même que la plaque supérieure (12) en une seule pièce avec ses nervures (14), ses écarteurs (16) et les parois latérales (24).

4. Palette en matière synthétique selon les revendications 1, 2 ou 3 *caractérisée en ce que* la plaque de fond (20), respectivement ses deux parties constitutives (28), sont assemblées de manière fixe avec la plaque supérieure (12) par l'intermédiaire des entretoises (16), respectivement des parois latérales (24), grâce à un soudage en bout à l'aide de réflecteurs.

5. Palette en matière synthétique selon les revendications 1, 2, 3 ou 4 *caractérisée en ce que* les angles de la palette (10) présentent un biseau (30) d'environ 45°, respectivement une surface biseautée située dans le plan vertical.

6. Palette en matière synthétique selon les revendications 1, 2, 3, 4 ou 5 *caractérisée en ce que* elle est constituée d'une europalette, respectivement d'une palette d'échange européenne, de dimensions en longueur et en largeur de 1200 x 800 mm.

7. Palette en matière synthétique selon les revendications 1, 2, 3, 4 ou 5 *caractérisée en ce que* elle est constituée d'une palette dite de chimie de dimensions en longueur et en largeur de 1200 x 1000 mm.

8. Palette en matière synthétique selon les revendications 1, 2, 3, 4 ou 5 *caractérisée en ce que* la surface supérieure plane (34) de la palette (32) constituée en tant que cadre de base d'un conteneur à palette, comporte une gorge continue (36), courant dans la zone périphérique de ladite surface supérieure, et dans laquelle s'engage le bord inférieur de l'enveloppe extérieure d'appui du conteneur.

9. Palette en matière synthétique selon la revendication 8 *caractérisée par* un listel (38) continu, prévu sur la face intérieure de la gorge (36), de section transversale sensiblement triangulaire, saillant sur la surface supérieure (34) de la palette.

10. Palette en matière synthétique selon les revendications 8 ou 9 *caractérisée par* une rainure (40) rectiligne, prévue au milieu de la palette (32), de profondeur croissante en direction du bord extérieur de la palette.

11. Palette en matière synthétique selon l'une des revendications 1 à 10 *caractérisée en ce que* la plaque de fond, respectivement les parties (28) composant celle-ci, et la plaque supérieure (12) sont entièrement en matériau synthétique de récupération (matière synthétique recyclée).

12. Palette en matière synthétique selon l'une des revendications 1 à 11 *caractérisée en ce que* la plaque de fond (20) qui est fabriquée dans le même matériau (matière synthétique) que la plaque supérieure (12), contient en outre une matière de charge, respectivement une bourre de fibres, pour accroître la résistance du matériau et son coefficient d'élasticité.

13. Palette en matière synthétique selon l'une des revendications 1 à 12 *caractérisée en ce que* la palette (32) constituée en tant que palette ou cadre de base d'un contedneur à palette, comporte sur sa surface supérieure (34) pleine, sensiblement plane, dans la zone de son bord extérieur ou zone périphérique, un épaulement d'appui (44) saillant, courant au moins partiellement lelong du pourtour de ladite surface supérieure, servant d'appui ou de support au récipient en matière synthétique posé sur la palette.

14. Palette en matière synthétique selon l'une des revendications 1 à 13 *caractérisée en ce que* la surface supérieure (34) sensiblement plane de la plaque supérieure (12) de la palette est légèrement inclinée vers la gorge médiane (40).
